# EUROPÄISCHE PATENTSCHRIFT

(11) **EP 0 852 775 B1**
(45) Veröffentlichungstag und Bekanntmachung des Hinweises auf die Patenterteilung: **21.04.1999**
(21) Anmeldenummer: 96932448.2
(22) Anmeldetag: 21.08.1996
(51) Int. Cl.: G07B 17/00

(54) **POSTSTÜCK-BEHANDLUNGS-VORRICHTUNG UND -VERFAHREN**
MAIL HANDLING PROCESS AND DEVICE
PROCEDE ET DISPOSITIF DE TRAITEMENT DU COURRIER

(30) Priorität: 29.09.1995 DE 19536482; 04.12.1995 DE 19545158
(43) Veröffentlichungstag der Anmeldung: 15.07.1998
(60) Teilanmeldung: 98103641.1
(73) Patentinhaber: Siemens Nixdorf Informationssysteme AG, 33106 Paderborn (DE)
(72) Erfinder: LUTZ, Bernhard, D-33129 Delbrück (DE); TEWES, Udo, D-33106 Paderborn (DE); URBAN, Uwe, D-33102 Paderborn (DE); KREMER, Holger, D-33175 Bad Lippspringe (DE); FLÜCKIGER, Hans, Walter, CH-8618 Ötwil am See (CH); SIEBER, Stefan, CH-8952 Schlieren (CH)
(74) Vertreter: Epping, Wilhelm, Dr.-Ing.
(86) Internationale Anmeldenummer: DE9601552
(87) Internationale Veröffentlichungsnummer: WO9713223

(56) Entgegenhaltungen:
- EP-A- 0 031 973
- EP-A- 0 643 374
- EP-A- 0 647 479

## Beschreibung

Die Vorrichtung und das Verfahren betreffen ein Gerät, mit dem Poststücke oder dergleichen automatisch entgegengegenommen werden können.

Es handelt sich um Geräte, welche gleichzeitig in der Lage sind, die Beförderungsgebühr für das Poststück entsprechend den jeweils geltenden Bestimmungen zu ermitteln und das Poststück mit den auch bei manueller Entgegennahme aufzubringenden Markierungen zu versehen.

In der EP-A-0 264 502 wird ein Gerät beschrieben, welches Briefe entgegennimmt, auswiegt, frankiert und ein Porto kassiert. Dieses Gerät ist jedoch nur in der Lage, durch einen Schlitz passende flache Briefe entgegenzunehmen und weiterzubehandeln.

Aus der EP-A-0 643 374 ist bereits ein elektronisches Frankiersystem für Post stücke bekannt mit einem Gehäuse und einem darin angeordneten, durch eine Verschlußplatte verschließbaren Annahmefach für zu bearbeitende Poststücke, einer Steuereinrichtung, einer Dispositionsplatte für die Poststücke, mindestens einer Meßeinrichtung für physikalische Eigenschaften des Poststücks, wobei aus dem Gewicht und den Abmessungen in der Steuereinrichtung ein Freimachungsbetrag errechnet wird, und einer mit der Steuereinrichtung verbundenen Druckeinrichtung zum Aufbringen einer Freimachung auf das Poststück.

Die Meßeinrichtungen sind eine Waage und eine Anzahl von Lichtschranken für die maximal zulässige Länge und Breite des Poststücks. Zum Ausmessen der Länge und Breite wird das Poststück zu zwei zueinander senkrecht stehenden Kanten der Dispositionsplatte ausgerichtet und aus der Überdeckung einzelner Lichtschranken auf die Abmessungen geschlossen. Mit der Ausrichtung wird das Poststück auch in einen geometrischen Bezug gebracht, der für den Ort der Aufbringung der Freimachung bestimmend ist.

In der EP-A-0 647 749 ist ein Paket-Sortiersystem geoffenbart, welches die Oberfläche auf einem Transportband beförderter Pakete mit einer Videokamera abtastet und die Höhe der Pakete mit einem Ultraschall-Sensor mißt. Mit mehreren weiteren Kameras wird das Adressenfeld erfaßt.

Die Gebühren für Postsendungen richten sich nicht nur nach dem Gewicht sondern auch nach deren Abmessungen. Somit müssen in einem System zur automatischen Annahme von Poststücken auch deren Abmessungen einwandfrei ermittelt werden können. Dies bereitet bei nicht völlig planen Poststücken, wie z.B. dickeren Briefen und Päckchen, unter Umständen erhebliche Schwierigkeiten, da sich bei dem Versuch, die maximale geometrische Ausdehnung eines größeren Gegenstandes mit einer Kamera auszumessen, eine Meßunsicherheit aufgrund der Parallaxe ergibt.

Aufgabe der Erfindung ist es, ein Gerät und ein Betriebsverfahren für ein solches Gerät anzugeben, mit dem praktisch alle zur Beförderung zugelassenen Poststücke entgegengenommen, ausgemessen und behandelt werden können.

Die Erfindung löst diese Aufgabe dadurch, daß der das Poststück einliefernde Kunde dasselbe auf einer Dispositionsfläche ablegt. Eine Lichtschrankenzeile mißt die Dicke des Poststücks, und mit einer elektronischen Kamera werden Bilder des Poststücks erstellt. Mit Hilfe der Bilder kann sowohl die Länge und Breite des Poststücks ermittelt, die Position einer Markierung, insbesondere einer Briefmarke oder eines Klebeetiketts bestimmt und verifiziert werden als auch ein Einlieferungsprotokoll erstellt werden, ohne daß der Gegenstand notwendig in einer bestimmten Lage abgeliefert werden muß.

Eine exakte Messung der Länge und Breite des Poststücks wird dadurch ermöglicht, daß zwischen der Dispositionsfläche und der Kamera eine Fresnel-Linse so angeordnet ist, daß ihr Brennpunkt in dem Brennpunkt der Kameraoptik liegt, wobei die Abmessungen der Fresnel-Linse größer als die senkrechte Projektion des größten zu vermessenden Poststücks auf die Dispositionsfläche ist.

Auch größere Fresnel-Linse können preiswert hergestellt werden. Sie nehmen nur geringen Raum in Richtung der optischen Achse ein, so daß kostengünstige raumsparende Meßsysteme aufgebaut werden können, mit denen auch größere Gegenstände genau ausgemessen werden können.

Die Dispositionsfläche ist zweckmäßigerweise eine lichtstreuende Fläche, so daß das auszumessende Poststück auf einer diffus beleuchteten Fläche liegt. Die Dispositionsfläche kann dabei ein lichtdurchlässiger Diffusor, also eine Mattscheibe sein, wobei die Lichtquelle vorzugsweise unterhalb der Dispositionsfläche und die Kamera darüber angeordnet ist. Bei einer lichtdurchlässigen Dispositionsfläche ist die Lichtquelle, die auch mehrere Lampen umfassen kann, vorzugsweise seitlich oberhalb der Dispositionsfläche angeordnet.

Die Abbildung des Poststücks oder seines Schattenrisses auf das CCD-Element der elektronischen Kamera ermöglicht dann in an sich bekannter Weise das Ermitteln der exakten Abmessungen der Poststücke. Neben einer raumsparenden, technisch einfachen und preiswerten Lösung zur Vermessung der Kontur von Post stücken hat die erfindungsgemäße Lösung noch einen weiteren Vorteil: Wenn die Fresnel-Linse so angeordnet wird, daß sie aus dem Strahlengang der Kamera betriebsmäßig ausrückbar ist, kann mit derselben oder auch einer benachbarten weiteren Kamera auch eine Aufnahme von der Oberfläche des Post stücks gemacht werden, um beispielsweise eine Quittung für die Entgegennahme und Bearbeitung des Poststücks zu erstellen, Adreßcodes auszuwerten und dergleichen. Hierzu ist gegebenenfalls lediglich eine zusätzliche Lichtquelle vorzusehen, um das Poststück von oben zu beleuchten.

Gemäß einer alternativen Ausführungsform der Erfindung wird vorgeschlagen, die eingangs genannte Vorrichtung so auszubilden, daß zwischen der Lichtquelle und dem Poststück eine Fresnel-Linse und zwischen dem Poststück und der Kamera ein lichtdurchlässiger Diffusor angeordnet ist. Dabei kann entweder die der der Kamera zugewandte Seite der Fresnel-Linse selbst als Auflagefläche verwendet werden, oder die Auflagefläche ist eine zwischen der Fresnel-Linse und dem Diffusor angeordnete transparente Platte.

Weitere vorteilhafte Ausgestaltungen und Varianten der Erfindung sind in der nachfolgenden Beschreibung und Zeichnung von Ausführungsbeispielen sowie in den Patentansprüchen dargestellt. Es zeigt:
- Fig. 1: eine schematische Darstellung einer Poststück-Behandlungseinrichtung in einer bevorzugten Ausführungsform,
- Fig. 2-5: die Einrichtung aus Fig. 1 in verschiedenen Arbeitssituationen,
- Fig. 6: eine schematische Darstellung einer erfindungsgemäßen Meßvorrichtung für die Poststück-Dimensionen gemäß einer ersten Ausführungsform,
- Fig. 7: eine der Figur 6 entsprechende Darstellung einer zweiten Ausführungsform der Meßvorrichtung.

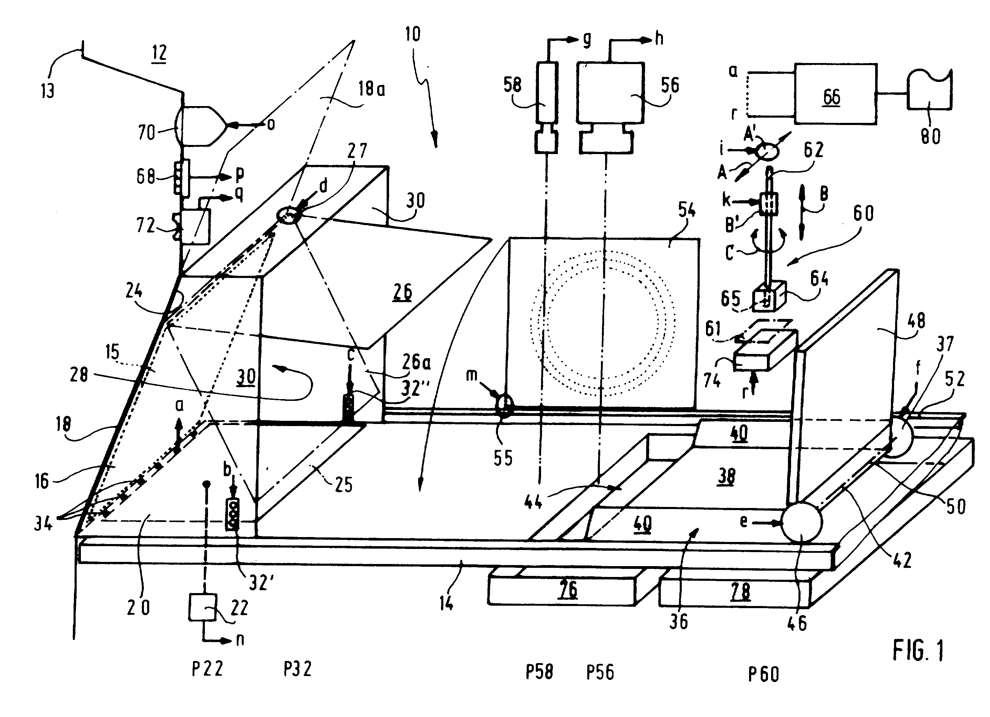

In Figur 1 ist eine Vorrichtung 10 zur automatischen Behandlung von Poststücken in einer perspektivischen Seitenansicht schematisch dargestellt. Sie ist in ein Gehäuse 12 eingebaut von dem der besseren Anschaulichkeit wegen nur die Kontur der Vorderwand 13 gezeigt ist. Die im folgenden beschriebenen Baugruppen sind auf einem Rahmen 14 aufgebaut, der mitsamt der Vorderwand 13 auf nicht dargestellten Teleskopschienen in dem Gehäuse 12 verschieblich gelagert ist.

Hinter einem Durchbruch 15 in der Vorderwand 13 ist ein Annahmefach 16 angeordnet, das durch eine Schiebetür 18 verschlossen ist. Um das Annahmefach 16 einem Kunden zugänglich zu machen, kann die Schiebetür 18 nach oben in die mit strichpunktierten Linien dargestellte Position 18a geschoben werden. Nach unten ist das Annahmefach durch die Wägeplatte 20 einer elektronischen Waage 22 begrenzt. Oberhalb der Schiebetür 18 ist an die Vorderwand 24 des Annahmefachs 16 eine Verschlußklappe 26 angelenkt, die zwischen einer waagerecht in das Innere der Vorrichtung ragenden Position und einer nach unten geklappten Position 26a verschwenkbar ist. Die Schiebetür 18 und die Verschlußklappe 26 werden von einem ersten Motor 27 angetrieben. Sie begrenzen das Annahmefach 16, bei dem die Schiebetür 18 und die Verschlußklappe 26 nicht gleichzeitig geöffnet sind. Damit wird sichergestellt, daß während des Annahmevorgangs die weiteren Teile der Vorrichtung nicht von außen zugänglich sind.

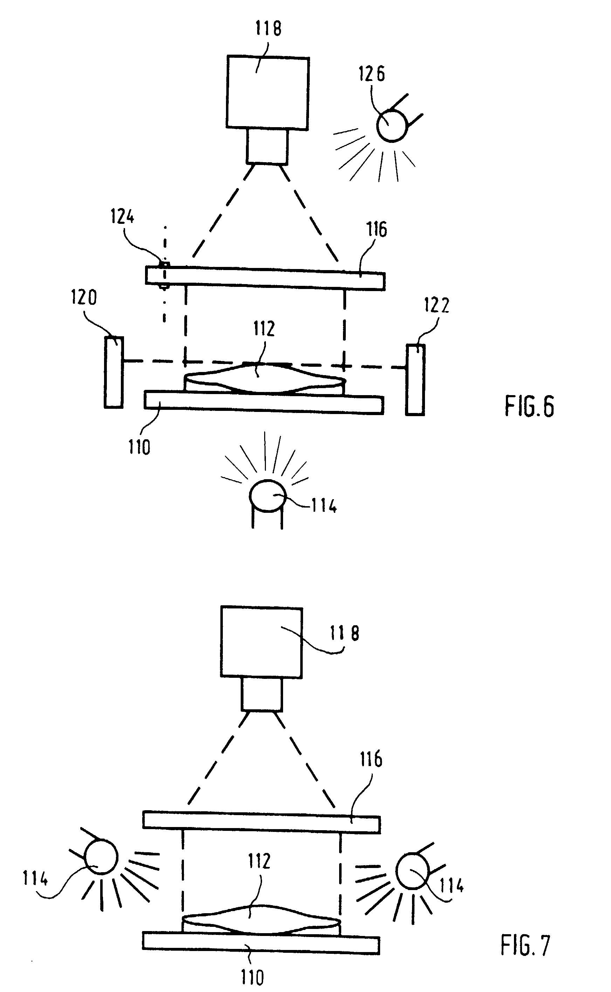

Ein einzulieferndes Poststück 112 (Fig. 6) wird bei geöffneter Schiebetür 18a und heruntergeklappter Verschlußklappe 26a von einem einliefernden Kunden auf eine Dispositionsplatte 38, welche sich dazu im Annahmefach 16 befindet, gelegt. Die Dispositionsplatte 38 bildet in der dargestellten Ausführungsform den Boden einer Schublade 36, die durch einen Schlitz 25 unterhalb der heruntergeklappten Verschlußklappe 26a in das Annahmefach 16 und über die Wägeplatte 20 geschoben werden kann.

Oberhalb der Wägeplatte 20 und in der Nähe einer hinteren Öffnung 28 des Annahmefachs 16 ist an dessen Seitenwänden 30 eine senkrecht stehende Lichtschrankenzeile 32 mit einer Senderzeile 32' und einer Empfängerzeile 32" befestigt. Unmittelbar hinter der Schiebetür 18 ist in den Rahmen 14 eine Reihe von Reflexlichtschranken 34 eingebaut, deren Abtastrichtung senkrecht nach oben weist. Die Reflexlichtschranken 34 sind mit geringem Abstand über die gesamte Breite des Annahmefachs 16 verteilt.

Auf dem Rahmen 14 ist die Schublade 36 mit Hilfe eines zweiten Motors 37 zwischen einer in das Annahmefach 16 eingefahrenen Position P22 und verschiedenen außerhalb des Aufnahmefachs 16 liegenden Positionen P58, P56, P60 verfahrbar. Die Schublade 36 weist einen Boden 38 aus einem opaken Material, transparente Seitenwände 40 und eine Rückwand 42 auf. An ihrer Vorderseite 44 und nach oben ist die Schublade 36 offen. In ihrer in das Annahmefach 16 eingefahrenen Position P22 ist die Schublade 36 durch einen nicht dargestellten Verstellantrieb auf die Wägeplatte 20 absenkbar. An der Rückwand 42 der Schublade 36 ist ein Schwenkantrieb 46 angebracht, an der auch eine Wendeplatte 48 aus opakem Material schwenkbar befestigt ist. Der Schwenkantrieb 46 ermöglicht die voneinander unabhängige Verschwenkung der Schublade 36 und der Wendeplatte 48 oberhalb des Rahmens 14 um eine zur Rückwand 42 parallele Schwenkachse 50 jeweils um 180°, sowie eine Absenkung nach unten.

An einen Seitenholm 52 des Rahmens 14 ist eine Fresnel-Linse 54 so angelenkt, daß sie mit Hilfe eines dritten Motors 55 zwischen einer die Schublade 36 überdeckenden Position und einer aus dem Verschiebeweg der Schublade herausgeschwenkten Position motorisch verschwenkbar ist. Mittig über der -auf die Schublade 36 herabgeschwenkten-Fresnel-Linse 54 ist eine Flächen-Videokamera 56 angeordnet, deren Öffnungswinkel die Erfassung der gesamten Oberfläche der Fresnel-Linse 54 erlaubt. Neben dieser ist mittig über dem Rahmen 14 noch eine hochauflösende Zeilen-Videokamera 58 angebracht, deren Öffnungswinkel der Breite der Schublade 36 entspricht. Eine Applikationseinrichtung 60 für Markierungen, insbesondere Klebeetiketten 61 und Wertmarken ist durch einen vierten Motor A' über die gesamte Breite der Schublade 36 in Richtung eines Doppelpfeils A bewegbar. Ein fünfter Motor B' vermag die Applikationseinrichtung 60 in Richtung des Doppelpfeils B auf die Schublade 36 abzusenken und wieder anzuheben. Die Applikationseinrichtung 60 umfaßt ein Rohr 62, das an eine nicht dargestellte Vakuumpumpe angeschlossen ist, und dessen unteres Ende von einem elastischen Kissen 64 aus einem geschlossenzelligen Schaumkunststoff umgeben ist. Durch den fünften Motor B' ist das Rohr 62 ferner zusammen mit dem Kissen 64 um die Längsachse des Rohres drehbar, wie der Doppelpfeil C verdeutlicht.

Die Motoren für die vorgenannten Bewegungsabläufe sind mit einer Steuereinrichtung 66 verbunden. Die Endlagen der Schiebetür 18, der Verschlußklappe 26, des Schwenkantriebs 46 und der Fresnel-Linse 54 werden von nicht dargestellten Endschaltern ebenfalls an die Steuereinrichtung 66 gemeldet, die die Antriebsmotoren abhängig von diesen Meldungen steuert. Die Position der Schublade 36 auf ihrem Verschiebeweg und die Koordinaten der Manipulator-Antriebe werden durch Sensoren an die Steuereinrichtung 66 gemeldet. Mit letzterer sind auch die Datenausgänge der Waage 22 und der Kameras 56 und 58 sowie die Lichtschranken 32 und 34 verbunden. Die Verbindungen sind durch Verbindungspfeile a bis r symbolisch dargestellt.

In der Bereitschaftsposition der Vorrichtung 10 ist die Schiebetür in die Position 18a und die Verschlußklappe in die Position 26a gefahren. Die Schublade 36 befindet sich im Annahmefach 16. Die genannten Elemente sind in dieser Position -beispielsweise durch eine motortypische Selbsthemmung- verriegelt.

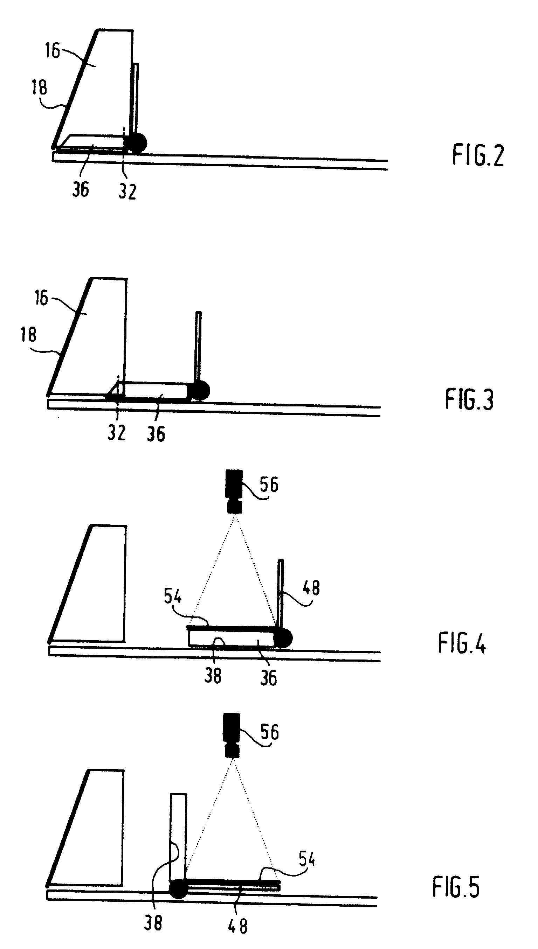

Die Figuren 2 bis 5 zeigen die Vorrichtung 10 in verschiedenen Arbeitspositionen. In Figur 2 ist die Situation unmittelbar nach dem Ablegen eines Post stücks in der Schublade 36 dargestellt. Die Schiebetür 18 ist geschlossen und die Schublade 36 auf die Wägeplatte 20 abgesenkt. In dieser Position kann die Waage 22 das Gewicht des eingelegten Poststücks ermitteln und an die Steuerung melden. Nach dem Wägevorgang wird die Schublade 36 wieder angehoben und aus dem Annahmefach 16 nach hinten herausgefahren. Nach Zurücklegen einer vorgegebenen Wegstrecke -im Ausführungsbeispiel sind dies 4 cm- dürfen die Reflexlichtschranken 34 kein an dem Poststück reflektiertes Licht mehr empfangen. Sollte dies doch der Fall sein, so wertet die Steuereinrichtung 66 dies als Indiz dafür, daß das Poststück 112 von der Schiebetür 18 eingeklemmt worden ist. In diesem Fall wird die Schublade 36 in ihre Ruheposition zurückgefahren und die Schiebetür 18 geöffnet. Sind hingegen alle Reflexlichtschranken 34 frei, setzt die Schublade 36 ihren Weg fort. Dabei wird die gesamte Schubladenfläche durch die transparenten Seitenwände 40 hindurch von der Lichtschrankenzeile 32 überstrichen. Abhängig von der Höhe des Poststücks wird ein Teil der Lichtschrankenempfänger 32" abgedunkelt. Die Zahl der abgedunkelten Lichtschrankenempfänger 32" ist ein Maß für die Höhe des Poststücks und wird ebenfalls an die Steuereinrichtung 66 gemeldet. Figur 3 zeigt die Situation nach Beendigung der Dickenmessung.

In Figur 4 hat die Schublade 36 den Erfassungsbereich der Flächenkamera 56 erreicht und ist dort angehalten worden. Die Fresnel-Linse 54 ist auf die Schublade 36 geschwenkt worden. Der opake Boden 38 der Schublade 36 wird von unten diffus durchleuchtet. Die Flächenkamera 56 erfaßt die Umrisse des Poststücks, was dank der Parallelisierung der Lichtstrahlen durch die Fresnel-Linse 54 parallaxenfrei möglich ist. Das Videosignal der Flächenkamera 56 wird zu der Steuereinrichtung 66 übertragen und dort abgespeichert. Nun wird die Fresnel-Linse 54 über dem Poststück 112 weggeschwenkt. Die hochauflösende Kamera 58 sendet darauf die Videosignale einer exakten Ablichtung des Poststücks 112, in der nicht nur die Umrisse dieses Poststücks sondern die gesamte Oberfläche mit dem Adressenfeld enthalten ist, an die Steuereinrichtung 66.

Der Kunde wird nun aufgefordert die gewünschte Versandart, beispielsweise "Standardbrief", "Eilboten", "Einschreiben" auf einer Tastatur 68 einzugeben. Die Steuereinrichtung 66 berechnet nun aufgrund dieser Angaben und des Gewichts, der Dicke, Länge und Breite des Poststücks das zu zahlende Porto und zeigt dieses dem Kunden an. Gleichzeitig wird auf einem Bildschirm 70 das Post stück 112 in einer normierten Lage, d.h. mit zu den Bildschirmrändern parallelen Kanten, abgebildet. In der rechten oberen Ecke des Poststücks ist eine Freimachung in Gestalt eines Etiketts symbolisch eingeblendet. Stimmt der Kunde der Anordnung dieses Etiketts zu, so entrichtet er das angezeigte Porto an einem Einzahlungsautomaten 72 und betätigt eine Abschlußtaste. Alternativ kann auch eine maschinenlesbare und ggf. elektronisch entwertbare Briefmarke Verwendung finden. Akzeptiert der Kunde den Anbringungsort der Freimachung hingegen nicht, beispielsweise weil das Etikett das Anschriftenfeld überdecken würde, so kann er per Tastendruck auf dem Bildschirm 70 das Bild des Poststücks jeweils um 90° drehen, bis er einen ihm genehmen Anbringungsort für das Etikett gefunden hat. Durch Steuertasten kann dem Kunden die Möglichkeit gegeben werden, die vorgeschlagene Position zu modifizieren. Auf dem Bildschirm 70 ist auch zu erkennen, wenn das Poststück 112 mit dem Adressenfeld nach unten in die Schublade 36 gelegt wurde. Der Kunde hat dann die Möglichkeit, durch Betätigen einer Taste "Poststück wenden" das Poststück 112 umzudrehen. Dies geschieht folgendermaßen: Die Wendeplatte 48 wird aus ihrer in Figur 1 dargestellten aufrechten Stellung auf die Schublade 36 geschwenkt. Anschließend wird die gesamte Anordnung um 180° nach rechts geschwenkt, so daß das Poststück 112 auf der Wendeplatte 48 zu liegen kommt. Anschließend wird die Schublade 36 um 90° zurückgeschwenkt. Nun wird die gesamte Anordnung aus Schublade 36 und Wendeplatte 48 um die Breite der Wendeplatte 48 nach links gefahren, so daß das Post stück 112 wieder unter der Flächenkamera 56 und der hochauflösenden Kamera 58 zu liegen kommt. Diese Situation ist in Figur 5 dargestellt. Die Kameras 56, 58 ermitteln nun nacheinander noch einmal bei heruntergeschwenkter Fresnel-Linse 54 die Lage des Poststücks 112 auf der Wendeplatte 48 und bei herausgeschwenkter Fresnel-Linse 54 das exakte Bild des Poststücks. Der Postkunde hat nun noch einmal die Möglichkeit, den Anbringungsort des Etiketts 61 auf dem Poststück 112 zu bestimmen.

Alternativ zu der geschilderten Verwendung der Wendeplatte 48 als Dispositionsplatte kann auch, nachdem die Schublade 36 zurückgeschwenkt wurde, die Wendeplatte 48 ihrerseits wieder geschwenkt werden, so daß das Poststück in der umgedrehten Stellung in Schublade 36 rutscht und dort weiterbearbeitet werden kann.

Nach Begleichung des Portos und der Freigabe des Etikettierungsortes auf dem Poststück 112 wird von einem mit der Steuereinrichtung 66 verbundenen Etikettendrucker 74 ein entsprechend bedrucktes Etikett 61 bereitgestellt und von der Applikationseinrichtung 60 abgeholt. Dies geschieht dadurch, daß das Kissen 64 über das Etikett 61 gebracht und auf dieses absenkt wird. Der in dem Rohr 62 erzeugte Unterdruck führt zur Ansaugung des Etiketts an das Kissen 64, wo es festgehalten wird. Die Steuereinrichtung 66 errechnet nun aus der tatsächlichen Lage des Poststücks und dem Plazierungswunsch des Kunden den tatsächlichen Anbringungsort des Etiketts 61 und steuert die Applikationseinrichtung 60 über den gewünschten Anbringungsort und drückt das Etikett auf das Poststück 112. Dadurch, daß das Kissen elastisch ist, kann das Etikett 61 auch auf unebene Oberflächen aufgebracht werden.

Handelte es sich bei dem Poststück beispielsweise um eine Einschreibsendung, so wird mit der hochauflösenden Kamera 58 ein sehr genaues elektronisches Bild von der Vorder-und Rückseite dieses Poststücks aufgenommen und in einem Recherchencomputer abgespeichert, von wo es abgerufen und ausgedruckt werden kann, wenn etwa nach einem verlorengegangenen eingeschriebenen Poststück gefahndet werden soll. Es ist auch möglich, ein Bild des Poststücks 112 auf einem Einlieferungsschein abzudrucken, der dann dem Kunden als Quittung ausgehändigt wird.

Nach endgültiger Abfertigung eines Poststücks wird die Schublade 36 nach unten geschwenkt, so daß das Poststück 112 in einen unter dem Rahmen 14 angeordneten Sammelbehälter 76 gleiten kann. Es ist auch möglich, mehrere Sammelbehälter 76, 78, beispielsweise für Standardsendungen oder für eingeschriebene und Eilsendungen, unter dem Rahmen 14 anzuordnen. Die Schublade 36 muß dann vor dem Abkippen des Poststücks 112 über den entsprechenden Behälter gefahren werden. Ein hinten liegender Behälter 78 wird erreicht, indem das Poststück 112 von der Wendeplatte 48 abgekippt wird.

In Figur 6 erkennt man eine einen lichtdurchlässigen Diffusor bildende Mattscheibe 110, auf der das zu vermessende Poststück 112 ruht. Unterhalb der Mattscheibe 110 befindet sich eine Lichtquelle 114. Oberhalb der Mattscheibe ist in einem Abstand, welcher dem dicksten zu verarbeitenden Poststück entspricht, eine Fresnel-Linse 116 angeordnet, deren Flächenmaße größer als die Ausdehnung des größten zu verarbeitenden Poststücks sind. Über der Fresnel-Linse 116 ist eine elektronische Kamera 118 angeordnet. Die Kamera 118 und die Fresnel-Linse 116 sind relativ zueinander so angeordnet, daß der Brennpunkt beider zusammenfällt. Da durch die Fresnel-Linse 116 nur die parallel zu der optischen Achse verlaufenden Bildstrahlen von der Kamera 118 erfaßt werden, wird der Umriß des Poststücks 112, der sich gegenüber der diffus leuchtenden Mattscheibe 110 abhebt, parallaxefrei von der Kamera 118 erfaßt. Die Höhe oder Dicke des Poststücks 112 kann wiederum durch eine -schematisch dargestellte- Zeilenlichtschranke 120, 122 erfaßt werden.

Für Quittungszwecke oder für die weitere Bearbeitung des Poststücks 112 kann auch hier die Oberseite der Postsendung fotografiert werden. Zu diesem Zweck ist die Fresnel-Linse 116 so angeordnet, daß sie aus dem Strahlengang der Kamera 118 ausrückbar ist. Dies kann in der in Figur 6 angedeuteten Weise dadurch erfolgen, daß die Fresnel-Linse 116 um eine vertikale Achse 124 schwenkbar gelagert ist. Ferner ist bei der Lösung nach Figur 6 eine weitere Lichtquelle 126 oberhalb der Mattscheibe 110 angeordnet, um die Oberseite des Poststücks 112 beleuchten zu können, wenn diese von der Kamera 118 aufgenommen werden soll. Für dies Aufnahme wird somit die Lichtquelle 114 aus- und die Lichtquelle 126 eingeschaltet. Die Verstellung der Fresnel-Linse 116 und die Beleuchtungsumschaltung erfordern keinen großen technischen Aufwand. Somit kann mit nur einer Kamera sowohl die Kontur des Poststücks 112 parallaxefrei vermessen als auch dessen Oberfläche abgebildet werden.

Figur 7 zeigt eine Ausführungsform, die sich von der gemäß Figur 6 lediglich durch die Anordnung der Lichtquelle und gegebenenfalls die Ausbildung der Dispositionsfläche unterscheidet. Gleiche Teile sind mit gleichen Bezugszeichen versehen. Die Lichtquelle 114 ist bei der Ausführungsform gemäß Figur 7 oberhalb der Dispositionsfläche 110 angeordnet, wobei diese wiederum als lichtstreuende Fläche ausgebildet ist. Sie kann eine Mattscheibe wie bei Figur 6 oder auch eine lichtundurchlässige, beispielsweise weiße Platte sein. Die Anordnung der Fresnel-Linse 116 und der Kamera 118 ist wie bei dem in Figur 6 gezeigten Ausführungsbeispiel. Diese Lösung hat den Vorteil, daß eine Beleuchtungsumschaltung entfällt, wenn die Fresnel-Linse 116 für die Abbildung der Oberfläche des Poststücks 112 aus dem Strahlengang der Kamera 118 ausgerückt wird.

An der beschriebenen Einrichtung sind verschiedene Abänderungen möglich, ohne den Rahmen der Erfindung zu sprengen: Statt der Erfassung der Poststück-Dicke mit Hilfe einer Lichtschrankenzeile ist es möglich, eine parallel zu dem Boden 38 der Schublade 36 ausgerichtete Andruckplatte von oben auf das Poststück abzusenken. Der Verschiebeweg ist dann ein Maß für die Dicke des Poststücks. Diese Anordnung hat den Vorteil, daß mit der Andruckplatte gewölbte Post stücke flach gedrückt werden können und Verknickungen heruntergebogen werden. Damit ist eine exaktere Dickenermittlung möglich. Statt einer Applikationseinrichtung für Etiketten kann an dem Manipulator ein Druckkopf, vorzugsweise ein Tintenstrahldruckkopf angebracht werden, mit dem ein Freimachungsvermerk direkt auf das Poststück gedruckt werden kann.

Das Umrißbild und die exakte Aufnahme des Poststücks können mit einer einzigen Kamera erzeugt werden. Die Videosignale des hoch aufgelösten Videobildes können einem Schriftenerkennungsverfahren unterzogen werden mit dem Ziel, die Postleitzahl aus der Anschrift automatisch zu erfassen. Mit dieser Information kann eine Briefsortieranlage direkt gesteuert oder aber die Postleitzahl in einer von nachgeordneten Briefsortieranlagen lesbaren Kodierung auf das Poststück oder auf das Etikett 61 gedruckt werden. Die so bestimmte Postleitzahl kann dem Kunden zur Überprüfung oder Korrektur angeboten werden.

## Patentansprüche

1. Vorrichtung (10) zur automatischen Annahme und Markierung von Poststücken (112) mit
- einem Gehäuse (12) und einem darin angeordneten, durch eine Verschlußplatte (18) verschließbaren Annahmefach (16) für zu bearbeitende Poststücke (112),
- einer Steuereinrichtung (66),
- einer Dispositionsplatte (38, 110),
- mindestens einer Meßeinrichtung (20, 22; 32', 32"; 56; 118) für physikalische Eigenschaften des Poststücks (112), deren Meßdaten der Steuereinrichtung (66) zugeleitet werden,
- einer mit der Steuereinrichtung (66) verbundenen Applikationseinrichtung (60) zum Aufbringen einer Markierung (61) auf ein auf der Dispositionsplatte (38, 110) liegendes Poststück (112),
**dadurch gekennzeichnet**, daß
- die Dispositionsplatte (38, 110) zwischen dem Annahmefach (16) und mehreren Poststück-Behandlungspositionen (P22, P32, P56, P58, P60) unter Steuerung durch die Steuereinrichtung (66) verschieblich ist,
- eine elektronische Kamera (58), oberhalb des Verschiebeweges der Dispositionsplatte (38, 110) an einer Poststück-Behandlungsposition (P58) angeordnet und mit der Steuereinrichtung (66) verbunden ist,
- eine Anzeige (70) wenigstens für ein mit der elektronischen Kamera (58) aufgenommenes Oberflächenbild des Poststücks (112) nahe dem Annahmefach (16) angebracht ist.

2. Vorrichtung nach Anspruch 1, **dadurch gekennzeichnet,** daß das Annahmefach (16) eine kundenseitige Öffnung (15) und eine zum Inneren der Vorrichtung (10) weisende hintere Öffnung (28) aufweist und eine Verschlußvorrichtung Verschlußplatten (18, 26) für beide Öffnungen (15, 28) umfaßt, deren eine (18; 26) nur zu öffnen ist, wenn die jeweils andere (26; 18) geschlossen ist und ein Melder vorgesehen ist, welcher den Schließzustand der Verschlußvorrichtung (18, 26) an die Steuereinrichtung (66) meldet.

3. Vorrichtung nach Anspruch 2, **dadurch gekennzeichnet**, daß die kundenseitige Verschlußplatte (18) in vertikaler Richtung verschieblich ist und unmittelbar hinter der kundenseitigen Verschlußplatte (18) eine Reihe von Lichtschranken (34) angeordnet ist, deren Abtastrichtung nach oben weist.

4. Vorrichtung nach einem der vorhergehenden Ansprüche, **gekennzeichnet durch** eine Waage (22), über die die Dispositionsplatte (38, 110) bringbar und dort für eine Wägung des Poststücks (112) absenkbar ist.

5. Vorrichtung nach einem der vorhergehenden Ansprüche, **gekennzeichnet durch** eine seitlich an dem Verschiebeweg der Dispositionsplatte (38, 110) angebrachte elektro-optische Meßvorrichtung für die Höhe des Poststücks (112) mit einer eindimensionalen Meßzeile (32', 32"; 120, 122).

6. Vorrichtung nach einem der vorhergehenden Ansprüche, **dadurch gekennzeichnet**, daß die Dispositionsplatte (38, 110) den Boden einer nach oben und an ihrer Vorderseite (44) offenen Schublade (36) bildet, welche um eine parallel zu ihrer Rückwand (42) verlaufende Schwenkachse (50) schwenkbar ist.

7. Vorrichtung nach Anspruch 6, **dadurch gekennzeichnet,** daß an die Rückwand (42) eine relativ zu der Schublade (36) und auch zusammen mit dieser verschwenkbare Wendeplatte (48) angelenkt ist.

8. Vorrichtung nach einem der vorhergehenden Ansprüche, **dadurch gekennzeichnet**, daß eine Lichtquelle (114) zum Beleuchten der Dispositionsplatte (38, 110) oder auch der Wendeplatte (48), über der Dispositionsplatte (38, 110) oder auch der Wendeplatte (48) eine Fresnel-Linse (54, 116) und darüber eine zweite elektro-optische Meßeinrichtung (56, 118) für die Länge und Breite des Poststücks (112) angeordnet ist, wobei der Brennpunkt der Fresnel-Linse (54, 116) in dem Brennpunkt der zweiten elektrooptischen Meßeinrichtung (56, 118) liegt und die Abmessungen der Fresnel-Linse (54, 116) größer als die senkrechte Projektion des größten zu vermessenden Poststücks (112) auf die Dispositionsplatte (38, 110) oder auf die Wendeplatte (48) ist.

9. Vorrichtung nach Anspruch 8, **dadurch gekennzeichnet,** daß die Dispositionsplatte (38, 110) oder auch die Wendeplatte (48) eine lichtstreuende Fläche ist.

10. Vorrichtung nach Anspruch 9, **dadurch gekennzeichnet**, daß die Dispositionsplatte (38, 110) oder auch der Wendeplatte (48) opak und die Lichtquelle (114) darunter angeordnet ist.

11. Vorrichtung nach Anspruch 9, **dadurch gekennzeichnet**, daß die Lichtquelle (114) seitlich oberhalb der Dispositionsplatte (38, 110) oder der Wendeplatte (48) angeordnet ist.

12. Vorrichtung nach einem der Ansprüche 8 bis 11, **dadurch gekennzeichnet**, daß die Fresnel-Linse (54, 116) zwischen einer die Dispositionsplatte (38, 110) oder die Wendeplatte (48) überdekkenden und einer diese freigebenden Position verschwenkbar ist.

13. Vorrichtung nach einem der Ansprüche 1 bis 7, **dadurch gekennzeichnet**, daß unterhalb der Dispositionsplatte (38, 110) oder auch der Wendeplatte (48) eine Lichtquelle (114) zu deren Beleuchtung, zwischen dieser und der Dispositionsplatte (38, 110) eine Fresnel-Linse (54, 116), darüber ein lichtdurchlässiger Diffusor und darüber eine zweite elektro-optische Meßeinrichtung (56, 118) für die Länge und Breite des Poststücks (112) angeordnet ist.

14. Vorrichtung nach Anspruch 13, **dadurch gekennzeichnet**, daß die Dispositionsplatte (38, 110) von der der zweiten elektro-optische Meßeinrichtung (56, 118) zugewandten Seite der Fresnel-Linse (54, 116) gebildet ist.

15. Vorrichtung nach Anspruch 13, **dadurch gekennzeichnet,** daß die Dispositionsplatte (38, 110) oder auch der Wendeplatte (48) von einer zwischen der Fresnel-Linse (54, 116) und dem Diffusor angeordneten transparenten Platte gebildet ist.

16. Vorrichtung nach einem der Ansprüche 8 bis 15, **dadurch gekennzeichnet**, daß die zweite elektronische Meßeinrichtung die elektronische Kamera (58) oder eine zweite elektronische Kamera (56, 118) ist.

17. Vorrichtung nach einem der vorhergehenden Ansprüche, **dadurch gekennzeichnet**, daß in der Steuereinrichtung (66) aus den Meßdaten eine Gebühr ermittelt und auf der Anzeige angezeigt wird und daß eine Kassiereinrichtung (72) vorgesehen ist, welche nach Vereinnahmung der Gebühr über die Steuereinrichtung (66) die Applikationseinrichtung (60) zum Aufbringen einer Markierung (61) freigibt.

18. Vorrichtung nach einem der vorhergehenden Ansprüche, **dadurch gekennzeichnet**, daß die Markierung auf ein Etikett (61) aufgebracht ist und die Applikationseinrichtung (60) einen Kopf (64) zum Aufnehmen des Etiketts (61) umfaßt, der sowohl über einen Etikettenspender (74) als auch über die Dispositionsplatte (38, 110) oder die Wendeplatte (48) positionierbar, wahlweise um eine vertikale Achse drehbar (C) und senkrecht verschiebbar (B) ist.

19. Vorrichtung nach Anspruch 18, **dadurch gekennzeichnet**, daß der Kopf (64) ein elastisches Kissen mit einem oder mehreren, unter Steuerung der Steuereinrichtung (66) mit Luftunterdruck beaufschlagbaren Kanälen (65) ist.

20. Vorrichtung nach einem der Ansprüche 6 bis 19, **dadurch gekennzeichnet**, daß unterhalb des Verschiebeweges der Schublade (36) wenigstens ein Behälter (76, 78) angeordnet ist und daß die Dispositionsplatte (38, 110) oder auch die Wendeplatte (48) über den wenigstens einen Behälter (76, 78) verfahrbar und dort nach unten verschwenkbar ist.

21. Vorrichtung nach einem der vorhergehenden Ansprüche, **dadurch gekennzeichnet**, daß wenigstens eine der elektronischen Kameras (56, 58, 118) eine Zeilenkamera mit einem der Breite der Dispositionsplatte (38, 110) oder der Wendeplatte (48) entsprechenden Öffnungswinkel ist, unter der das Poststück (112) hindurch bewegbar ist.

22. Vorrichtung nach einem der vorhergehenden Ansprüche, **gekennzeichnet durch** einen mit der Steuereinrichtung (66) verbundenen Drucker (80), welcher einen Beleg über die entrichtete Gebühr und/oder die erfolgte Einlieferung des Poststücks (112) mit oder ohne dessen Oberflächenbild ausgibt.

23. Verfahren zur automatischen Annahme und Markierung von Poststücken (112) mit den Schritten:
- Ablegen eines Poststücks (112) auf einer horizontalen Dispositionsplatte (38, 110) durch einen Kunden,
- Bestimmen des Gewichts und/oder der Abmessungen des Poststücks (112) durch wenigstens eine Meßvorrichtung (20, 22; 32', 32"; 56; 58; 120, 122),
- Bestimmung einer auf dem Poststück (112) aufzubringenden Markierung (61) in einer Steuereinrichtung (66) aus den durch die wenigstens eine Meßvorrichtung (20, 22; 32', 32"; 56; 58; 120, 122) bestimmten Meßwerten,
**gekennzeichnet durch** die folgenden Verfahrensschritte:
- Aufnahme eines Oberflächenbildes des auf der Dispositionsplatte (38, 110) befindlichen Poststücks (112) durch eine elektronische Kamera (58),
- Darstellung des Oberflächenbildes auf einem Bildschirm (70) zusammen mit der aufzubringenden Markierung (61) oder die Markierung charakterisierenden Eigenschaften,
- Aufbringung der Markierung (61) auf das Poststück (112) an einem durch den Kunden durch Tastaturbetätigung bestimmten Aufbringungsort.

24. Verfahren nach Anspruch 23, mit den weiteren Schritten:
- Anzeigen des Ortes der beabsichtigten Aufbringung der Markierung (61) auf dem Poststück (112), in der Darstellung des Oberflächenbildes,
- Eingabe der Zustimmung des Kunden zu dem beabsichtigten Aufbringungsort der Markierung (61) auf dem Poststück (112) durch Betätigen einer ersten Taste einer Eingabevorrichtung (68) oder wenigstens einer zweiten Taste zur Auswahl eines anderen Aufbringungsortes.

25. Verfahren nach Anspruch 23 oder 24, mit den zusätzlichen Schritten:
- Vor dem Ablegen des Poststücks auf der in einem Aufnahmefach (16) befindlichen Dispositionsplatte (38, 110) wird ein Verschluß (18) geöffnet und nach dem Ablegen geschlossen, so daß das Poststück (112) dem Zugriff des Kunden vorerst entzogen wird,
- nach dem Aufbringen der Markierung (61) wird das Poststück (112) von der Dispositionsplatte (38, 110) derart entfernt, daß es dem Zugriff des Kunden entgültig entzogen ist,
- sofern keine Markierung (61) aufgebracht wurde, wird die Dispositionsplatte (38, 110) in das Aufnahmefach (16) gebracht und der Verschluß (18) erneut geöffnet, so daß der Kunde das nicht markierte Poststück (112) entnehmen kann.

26. Verfahren nach Anspruch 25, bei dem die Dispositionsplatte (38, 110) nach dem Schließen des Verschlusses (18) in das Innere des Gehäuses (12) der Vorrichtung (10) verfahren wird und nach Zurücklegen einer vorbestimmten Strecke durch einen Sensor (34) ermittelt wird, ob das Poststück (112) zusammen mit der Dispositionsplatte (38, 110) verfahren wurde.

27. Verfahren nach Anspruch 26, bei dem bei einem negativen Ermittlungsergebnis des Sensors (34) die Dispositionsplatte (38, 110) in ihre Ausgangsstellung transportiert und der Verschluß (18) geöffnet wird.

28. Verfahren nach einem der Ansprüche 23 bis 27, wobei eine Gewichtsbestimmung dadurch erfolgt, daß die Dispositionsplatte (38, 110) vorübergehend auf eine Waage (20, 22) abgesenkt wird.

29. Verfahren nach Anspruch 28, wobei die Dispositionsplatte (38, 110) nach einer Gewichtsmessung unter die elektronische Kamera (58) oder auch eine zweite elektronische Kamera (56, 118) verschoben wird.

30. Verfahren nach einem der Ansprüche 23 bis 29, wobei die Länge und Breite des Poststücks (112) mittels des von einer elektronischen Kamera (56, 58, 118) erfaßten Oberflächenbildes bestimmt werden.

31. Verfahren nach Anspruch 30, bei dem eine lichtdurchlässige Dispositionsplatte (38, 110) von einer darunter angeordneten Lichtquelle (114) durchleuchtet wird, wobei ein Schattenbild des Poststücks (112) verwendet wird, das von der elektronischen Kamera (56, 58, 118) oberhalb des Poststücks (112) erfaßt wird.

32. Verfahren nach einem der Ansprüche 23 bis 31, wobei die Markierung (61) erst aufgebracht wird, nachdem eine Gebühr an einer dazu bestimmten Einrichtung (72) entrichtet wurde.

33. Verfahren nach einem der Ansprüche 23 bis 32, wobei das Oberflächenbild des Poststücks (112) auf dem Bildschirm (70) so ausgerichtet abgebildet wird, daß unabhängig von der Ausrichtung des Poststücks (112) bezüglich der Kanten der Dispositionsplatte (38, 110) mindestens eine Kante des Poststücks (112) in etwa parallel zu der Kante des Bildschirms (70) ist.

34. Verfahren nach einem der Ansprüche 23 bis 33, wobei die zur Anbringung der Markierung (61) vorgesehene Position in dem Oberflächenbild des Poststücks (112) angezeigt wird.

35. Verfahren nach Anspruch 34, wobei durch Betätigen einer Eingabetaste der Eingabevorrichtung (68) die Lage des Oberflächenbildes relativ zu der Position der Markierung (61) verändert werden kann.

36. Verfahren nach einem der Ansprüche 23 bis 35, wobei eine Wendeeinrichtung (36, 46, 48) das Poststück (112) derart wendet, daß es auf der zuvor nach oben weisenden Fläche zu liegen kommt.

37. Verfahren nach Anspruch 36, wobei die Wendeeinrichtung (36, 46, 48) das Poststück (112) auf eine Wendeplatte (48) umlagert, so daß die Wendeplatte (48) mindestens zeitweise an die Stelle der Dispositionsplatte (38, 110) tritt und das Verfahren, insoweit es die Erfassung von Lage, Form und bildlichen Eigenschaften des Poststücks betrifft, erneut durchgeführt wird.

38. Verfahren nach Anspruch 37, wobei das Poststück (112) auf die Wendeplatte (48) umgelagert wird, indem die Wendeplatte (48) zunächst in eine die Dispositionsplatte (38, 110) überdeckende Position geschwenkt und sodann gemeinsam mit der Dispositionsplatte (38, 110) um etwa 180° um eine nahe einer Kante der Dispositionsplatte (38, 110) liegende Achse (50) geschwenkt wird, so daß die Wendeplatte (48) unter dem Poststück (112) zu liegen kommt, und schließlich die Dispositionsplatte (38, 110) aus ihrer dann die Wendeplatte (48) überdeckenden Position weggeschwenkt wird.

39. Verfahren nach Anspruch 38, wobei anschließend die Dispositionsplatte (38, 110) in eine waagerechte Lage gebracht wird und danach die Wendeplatte (48) um die Achse (50) geschwenkt wird, so daß das Poststück (112) auf die Dispositionsplatte (38, 110) zu rutschen vermag.

40. Verfahren nach einem der Ansprüche 23 bis 39, wobei nach erfolgter Zustimmung des Kunden zu einer auf dem Bildschirm (70) dargestellten Position der Markierung (61) auf dem Poststück (112)
- die Markierung (61) durch eine Applikationsvorrichtung (60), die sich oberhalb des Poststücks (112) befindet und ein die Markierung (61) übertragendes Kopfstück (64) hat, auf dem Poststück (112) angebracht wird, wozu
- das Kopfstück (64) so um eine vertikale Achse gedreht wird (C), daß eine Kante der Markierung (61) ungefähr parallel zu einer Kante des Poststücks (112) ist, und unabhängig davon
- die Applikationseinrichtung (60) entlang einer ersten horizontalen Achse (A) auf eine erste berechnete Position verfahren wird, und anschließend, zuvor oder gleichzeitig
- die Dispositionsplatte (38, 110) entlang einer zu der ersten Achse (A) orthogonalen zweiten horizontalen Achse auf eine zweite berechnete Position verfahren wird, und
- sodann die Applikationseinrichtung (60) das Kopfstück (64) in Richtung (B) des Poststücks (112) absenkt und die Markierung (61) darauf aufbringt.

41. Verfahren nach Anspruch 40, wobei die Markierung ein Selbstklebe-Etikett (61) ist und das Kopfstück (64) das Etikett mittels eines elastischen Kissens mit einem oder mehreren mit Luftunterdruck beaufschlagten Kanälen (65) aufnimmt und transportiert.

42. Verfahren nach Anspruch 41, wobei das Selbstklebe-Etikett (61) von einem Etikettendrucker (74) bereitgestellt wird.

43. Verfahren nach einem der Ansprüche 40 bis 42, wobei das Oberflächenbild des Poststücks (112) nach Aufbringen der Markierung (61) dauerhaft gespeichert wird.

44. Verfahren nach einem der Ansprüche 23 bis 43, wobei eine Kopie des Oberflächenbildes auf einen Beleg gedruckt und dem Kunden verfügbar gemacht wird.

45. Verfahren nach einem der Ansprüche 23 bis 44, wobei ein zweites Oberflächenbild mit höherer Auflösung als das erste erstellt und gespeichert wird.

46. Verfahren nach Anspruch 45, bei dem eine zweite, hochauflösende Zeilenkamera (58) verwendet wird, wobei das Bild durch Verfahren der Dispositionsplatte (38, 110) relativ zu der Zeilenkamera (58) erstellt wird.

47. Verfahren nach einem der Ansprüche 23 bis 46, wobei nach Aufbringen der Markierung (61) die Dispositionsplatte (38, 110) oder die Wendeplatte (48) gekippt wird und dadurch das Poststück (112) in einen Behälter (76, 78) rutscht.

48. Verfahren nach einem der Ansprüche 23 bis 47, wobei auf das Oberflächenbild des Poststücks (112) ein Schrifterkennungsverfahren angewendet wird, dessen Ergebnis dem Kunden angezeigt und gegebenenfalls vom Kunden korrigiert wird.

49. Verfahren nach Anspruch 48, wobei aus der erkannten Schrift eine Postleitzahl gewonnen wird, welche zusätzlich auf das Poststück (112) aufgedruckt, und/ oder in die Markierung (61) aufgenommen und/oder zur Steuerung von Weichen bei der Weiterleitung des Poststücks (112) verwendet wird.

## Claims

1. Device (10) for the automatic acceptance and marking of items of mail (112), having
- a housing (12) and an acceptance compartment (16) which is arranged therein, can be closed by a closure plate (18) and is intended for items of mail (112) to be handled,
- a control means (66),
- a handling plate (38, 110),
- at least one measuring means (20, 22; 32', 32"; 56; 118) for physical properties of the item of mail (112), the measurement data of which are passed to the control means (66),
- an application means (60), connected to the control means (66), for applying a marking (61) to an item of mail (112) lying on the handling plate (38, 110)
characterized in that
- the handling plate (38, 110) can be displaced between the acceptance compartment (16) and a plurality of mail handling positions (P22, P32, P56, P58, P60) under control by the control means (66),
- an electronic camera (58), is arranged above the displacement path of the handling plate (38, 110) at a mail handling position (P58) and is connected to the control means (66),
- a display (70), at least for a surface image of the item of mail (112) recorded by the electronic camera (58), is fitted near the acceptance compartment (16).

2. Device according to Claim 1, characterized in that the acceptance compartment (16) comprises an opening (15) on the customer side and a rear opening (28) facing the interior of the device (10) and a closure device comprises closure plates (18, 26) for both openings (15, 28), of which one (18; 26) can only be opened when the other (26; 18) is closed, and a detector is provided, which reports the closed state of the closure device (18, 26) to the control means (66).

3. Device according to Claim 2, characterized in that the closure plate (18) on the customer side is displaceable in the vertical direction and directly behind the closure plate (18) on the customer side there is arranged a row of light barriers (34), the scanning direction of which points upwards.

4. Device according to one of the preceding claims, characterized by a balance (22), over which the handling plate (38, 110) can be brought and lowered there for weighing of the item of mail (112).

5. Device according to one of the preceding claims, characterized by an electro-optical measuring device, fitted to the sides of the displacement path of the handling plate (38, 110), for the height of the item of mail (112), having a one-dimensional measuring line (32', 32"; 120, 122).

6. Device according to one of the preceding claims, characterized in that the handling plate (38, 110) forms the base of a drawer (36) which is open at the top and at its front side (44) and can be swivelled about a swivel axis (50) running parallel to its rear wall (42).

7. Device according to Claim 6, characterized in that a turning plate (48) which can swivel in relation to the drawer (36) and also together with the latter is articulated on the rear wall (42).

8. Device according to one of the preceding claims, characterized in that there is arranged a light source (114) for illuminating the handling plate (38, 110) or else the turning plate (48), above the handling plate (38, 110) or else the turning plate (48) there is arranged a Fresnel lens (54, 116) and thereabove a second electro-optical measuring means (56, 118) for the length and width of the item of mail (112), the focal point of the Fresnel lens (54, 116) lying at the focal point of the second electro-optical measuring means (56, 118) and the dimensions of the Fresnel lens (54, 116) being greater than the vertical projection of the largest item of mail (112) to be measured onto the handling plate (38, 110) or onto the turning plate (48).

9. Device according to Claim 8, characterized in that the handling plate (38, 110) or else the turning plate (48) is a light-diffusing surface.

10. Device according to Claim 9, characterized in that the handling plate (38, 110) or else the turning plate (48) is opaque and the light source (114) is arranged therebeneath.

11. Device according to Claim 9, characterized in that the light source (114) is arranged laterally above the handling plate (38, 110) or the turning plate (48).

12. Device according to one of Claims 8 to 11, characterized in that the Fresnel lens (54, 116) can be swivelled between a position covering the handling plate (38, 110) or the turning plate (48) and a position exposing it.

13. Device according to one of Claims 1 to 7, characterized in that beneath the handling plate (38, 110) or else the turning plate (48) there is arranged a light source (114) for its illumination, between the latter and the handling plate (38, 110) a Fresnel lens (54, 116), thereabove a translucent diffuser and thereabove a second electro-optical measuring means (56, 118) for the length and width of the item of mail (112).

14. Device according to Claim 13, characterized in that the handling plate (38, 110) is formed by the side of the Fresnel lens (54, 116) facing the second electro-optical measuring means (56, 118).

15. Device according to Claim 13, characterized in that the handling plate (38, 110) or else the turning plate (48) is formed by a transparent plate arranged between the Fresnel lens (54, 116) and the diffuser.

16. Device according to one of Claims 8 to 15, characterized in that the second electronic measuring means is the electronic camera (58) or a second electronic camera (56, 118).

17. Device according to one of the preceding claims, characterized in that, in the control means (66), a charge is ascertained from the measurement data and is indicated on the display and in that a paying-in means (72) is provided, which, after receiving the charge, enables the application means (60) to apply a marking (61) via the control means (66).

18. Device according to one of the preceding claims, characterized in that the marking is applied to a label (61) and the application means (60) comprises a head (64) for picking up the label (61), which head can be positioned both over a label dispenser (74) and over the handling plate (38, 110) or the turning plate (48), is optionally rotatable (C), about a vertical axis, and vertically displaceable (B).

19. Device according to Claim 18, characterized in that the head (64) is a flexible pad with one or more channels (65) which can be subjected to reduced air pressure under the control of the control means (66).

20. Device according to one of Claims 6 to 19, characterized in that beneath the displacement path of the drawer (36) there is arranged at least one container (76, 78) and in that the handling plate (38, 110) or else the turning plate (48) can be moved over the least one container (76, 78) and can be swivelled down there.

21. Device according to one of the preceding claims, characterized in that at least one of the electronic cameras (56, 58, 118) is a line camera with an angular aperture corresponding to the width of the handling plate (38, 110) or of the turning plate (48), beneath which the item of mail (112) can be moved through.

22. Device according to one of the preceding claims, characterized by a printer (80) which is connected to the control means (66) and outputs a record of the charge made and/or of posting of the item of mail (112) with or without a surface image of the latter.

23. Process for the automatic acceptance and marking of items of mail (112) comprising the steps of:
- depositing of an item of mail (112) on a horizontal handling plate (38, 110) by a customer,
- determining the weight and/or the dimensions of the item of mail (112) by at least one measuring device (20, 22; 32', 32"; 56; 58; 120, 122),
- determining a marking (61), to be applied to the item of mail (112), in a control means (66) from the measured values determined by the at least one measuring device (20, 22; 32', 32"; 56; 58; 120, 122),
characterized by the following process steps:
- recording a surface image of the item of mail (112) located on the handling plate (38, 110) by an electronic camera (58),
- displaying the surface image on a screen (70) together with the marking (61) to be applied or properties characterizing the marking,
- applying the marking (61) to the item of mail (112) at a place of application determined by the customer by means of keypad actuation.

24. Process according to Claim 23, comprising the further steps of:
- displaying the place of intended application of the marking (61) on the item of mail (112) in the display of the surface image,
- entering the customer's agreement to the intended place of application of the marking (61) on the item of mail (112) by actuating a first key of an input device (68) or least a second key for the selection of another place of application.

25. Process according to Claim 23 or 24, comprising the additional steps that:
- before the item of mail is deposited on the handling plate (38, 110) located in an acceptance compartment (16), a closure (18) is opened and, after depositing, is closed, with the result that the item of mail (112) is provisionally inaccessible to the customer,
- after applying the marking (61), the item of mail (112) is removed from the handling plate (38, 112) in such a way that it is definitively inaccessible to the customer,
- if no marking (61) has been applied, the handling plate (38, 110) is brought into the acceptance compartment (16) and the closure (18) is opened again, with the result that the customer can remove the unmarked item of mail (112).

26. Process according to Claim 25, in which, after closing of the closure (18), the handling plate (38, 110) is moved into the interior of the housing (12) of the device (10) and, after covering a predetermined distance, it is ascertained by a sensor (34) whether the item of mail (112) together with the handling plate (38, 110) has been moved.

27. Process according to Claim 26, in which, in the event of a negative result of the ascertainment by the sensor (34), the handling plate (38, 110) is transported into its starting position and the closure (18) is opened.

28. Process according to one of Claims 23 to 27, a weight determination taking place by the handling plate (38, 110) being lowered temporarily onto a balance (20, 22).

29. Process according to Claim 28, the handling plate (38, 110) being displaced under the electronic camera (58) or else a second electronic camera (56, 118) after a weight-measuring operation.

30. Process according to one of Claims 23 to 29, the length and width of the item of mail (112) being determined by means of the surface image captured by an electronic camera (56, 58, 118).

31. Process according to Claim 30, in which a translucent handling plate (38,110) is transilluminated by a light source (114) arranged therebeneath, using an outline of the item of mail (112), which is captured by the electronic camera (56, 58, 118) above the item of mail (112).

32. Process according to one of Claims 23 to 31, the marking (61) only being applied after a charge has been paid at a means (72) intended for this purpose.

33. Process according to one of claims 23 to 32, the surface image of the item of mail (112) being depicted on the screen (70) in such an alignment that, irrespective of the alignment of the item of mail (112) with respect to the edges of the handling plate (38, 110), at least one edge of the item of mail (112) is approximately parallel to the edge of the screen (70).

34. Process according to one of Claims 23 to 33, the position intended for applying the marking (61) being indicated in the surface image of the item of mail (112).

35. Process according to Claim 34, it being possible to change the position of the surface image in relation to the position of the marking (61) by actuating an input key of the input device (68).

36. Process according to one of Claims 23 to 35, a turning means (36, 46, 48) turning the item of mail (112) in such a way that it comes to lie on the previously upward-facing surface.

37. Process according to Claim 36, the turning means (36, 46, 48) transferring the item of mail (112) onto a turning plate (48), with the result that the turning plate (48) at least temporarily takes the place of the handling plate (38, 110) and the process is carried out once again, to the extent that it concerns the sensing of the position, shape and image-related properties of the item of mail.

38. Process according to Claim 37, the item of mail (112) being transferred onto the turning plate (48) by initially swivelling the turning plate (48) into a position covering the handling plate (38, 110) and then swivelling it together with the handling plate (38, 110) through approximately 180° about an axis (50) lying close to one edge of the handling plate (38, 110), with the result that the turning plate (48) comes to lie beneath the item of mail (112), and finally the handling plate (38, 110) is swivelled away out of its position then covering the turning plate (48).

39. Process according to Claim 38, the handling plate (38, 110) subsequently being brought into a horizontal position and, thereafter, the turning plate (48) being swivelled about the axis (50), with the result that the item of mail (112) can slide onto the handling plate (38, 110).

40. Process according to one of Claims 23 to 39, in which, after the customer has agreed to a position of the marking (61) on the item of mail (112) displayed on the screen (70),
- the marking (61) is applied to the item of mail (112) by an application means (60) which is located above the item of mail (112) and has a head piece (64) transferring the marking (61), for which purpose
- the head piece (64) is rotated (C) about a vertical axis in such a way that one edge of the marking (61) is approximately parallel to one edge of the item of mail (112), and, independently of this,
- the application means (60) is moved along a first horizontal axis (A) to a first calculated position, and subsequently, before or at the same time,
- the handling plate (38, 110) is moved along a second horizontal axis, orthogonal to the first axis (A), to a second calculated position, and
- the application means (60) then lowers the head piece (64) in the direction (B) of the item of mail (112) and applies the marking (61) thereto.

41. Process according to Claim 40, the marking being a self-adhesive label (61) and the head piece (64) picking up the label and transporting it by means of a flexible pad with one or more channels (65) subjected to reduced air pressure.

42. Process according to Claim 41, the self-adhesive label (61) being provided by a label printer (74).

43. Process according to one of Claims 40 to 42, the surface image of the item of mail (112) being permanently stored after application of the marking (61).

44. Process according to one of Claims 23 to 43, a copy of the surface image being printed onto a record and made available to the customer.

45. Process according to one of Claims 23 to 44, a second surface image with higher resolution than the first being created and stored.

46. Process according to Claim 45, in which a second, high-resolution line camera (58) is used, the image being created by moving the handling plate (38, 110) in relation to the line camera (58).

47. Process according to one of Claims 23 to 46, the handling plate (38, 110) or the turning plate (48) being tipped after application of the marking (61) and the item of mail (112) sliding into a container (76, 78) as a result.

48. Process according to one of Claims 23 to 47, the surface image of the item of mail (112) undergoing a text recognition process, the result of which is indicated to the customer and, if need be, corrected by the customer.

49. Process according to Claim 48, the text recognized being used to obtain a ZIP code, which is additionally printed onto the item of mail (112), and/or included in the marking (61) and/or used for controlling diverters in the continued conveyance of the item of mail (112).

## Revendications

1. Dispositif (10) pour réceptionner et affranchir des articles (112) postaux de façon automatisée, comprenant
- une enveloppe (12), et un casier (16) de réception pour des articles (112) postaux à traiter, disposé dans l'enveloppe et pouvant être fermé par un panneau (18) de fermeture,
- une unité (66) de commande,
- un plateau (38, 110) de mise à disposition,
- au moins un équipement (20, 22; 32', 32"; 56; 118) de mesure de caractéristiques physiques de l'article (112) postal, dont les données de mesure sont transmises à l'unité (66) de commande,
- un équipement (60) applicateur, relié à l'unité (66) de commande, pour apposer une marque (61) d'affranchissement sur un article (112) postal reposant sur le plateau (38, 110) de mise à disposition,
caractérisé en ce que
- le plateau (38, 110) de mise à disposition peut, sous la commande de l'unité (66) de commande, être déplacé entre le casier (16) de réception et plusieurs positions (P22, P32, P56, P58, P60) de traitement de l'article postal,
- une caméra (58) électronique est disposée au-dessus du parcours de déplacement du plateau (38, 110) de mise à disposition, à une position (P58) de traitement de l'article postal, et elle est reliée à l'unité (66) de commande,
- un organe (70) d'affichage, au moins pour une image de la surface de l'article (112) postal enregistrée par la caméra (58) électronique, est disposé à proximité du casier (16) de réception.

2. Dispositif suivant la revendication 1, caractérisé en ce que le casier (16) de réception comporte une ouverture (15) côté client et une ouverture (28) arrière, tournée vers l'intérieur du dispositif (10), et un dispositif de fermeture comprend des panneaux (18, 26) de fermeture pour les deux ouvertures (15, 28), dont l'un (18; 26) ne peut être ouvert que si l'autre (26; 18) est respectivement fermé, et il est prévu un détecteur qui signale à l'unité (66) de commande l'état de fermeture du dispositif (18, 26) de fermeture.

3. Dispositif suivant la revendication 2, caractérisé en ce que le panneau (18) de fermeture côté client peut coulisser verticalement et une rangée de cellules (34) photoélectriques, dont la direction de balayage est dirigée vers le haut, est disposée juste derrière le panneau (18) de fermeture côté client.

4. Dispositif suivant l'une des revendications précédentes, caractérisé par une balance (22), au-dessus de laquelle peut être amené le plateau (38, 110) de mise à disposition et sur laquelle il peut être abaissé afin de peser l'article (112) postal.

5. Dispositif suivant l'une des revendications précédentes, caractérisé par un équipement de mesure électro-optique de la hauteur de l'article (112) postal, qui est disposé latéralement au parcours de déplacement du plateau (38, 110) de mise à disposition et qui comprend une ligne (32', 32"; 120, 122) de mesure à une dimension.

6. Dispositif suivant l'une des revendications précédentes, caractérisé en ce que le plateau (38, 110) de mise à disposition constitue le fond d'un tiroir (36), ouvert vers le haut et sur son côté (44) avant, qui peut pivoter autour d'un axe (50) de pivotement s'étendant parallèlement à sa paroi (42) arrière.

7. Dispositif suivant la revendication 6, caractérisé en ce qu'un plateau (48) de retournement, qui peut pivoter par rapport au tiroir (36) et conjointement avec lui, est articulé sur la paroi (42) arrière.

8. Dispositif suivant l'une des revendications précédentes, caractérisé en ce qu'une source (114) lumineuse est prévue pour éclairer le plateau (38, 110) de mise à disposition ou aussi le plateau (48) de retournement, une lentille (54, 116) de Fresnel est disposée au-dessus du plateau (38, 110) de mise à disposition ou aussi du plateau (48) de retournement, et un deuxième équipement (56, 118) de mesure électro-optique de la longueur et de la largeur de l'article (112) postal est disposé au-dessus, le foyer de la lentille (54, 116) de Fresnel se trouvant au foyer du deuxième équipement (56, 118) de mesure électro-optique, et les dimensions de la lentille (54, 116) de Fresnel étant supérieures à la projection verticale du plus grand article (112) postal à mesurer sur le plateau (38, 110) de mise à disposition ou sur le plateau (48) de retournement.

9. Dispositif suivant la revendication 8, caractérisé en ce que le plateau (38, 110) de mise à disposition ou aussi le plateau (48) de retournement est une surface dispersant la lumière.

10. Dispositif suivant la revendication 9, caractérisé en ce que le plateau (38, 110) de mise à disposition ou aussi le plateau (48) de retournement est opaque, et la source (114) lumineuse est disposée en dessous.

11. Dispositif suivant la revendication 9, caractérisé en ce que la source (114) lumineuse est disposée latéralement au-dessus du plateau (38, 110) de mise à disposition ou du plateau (48) de retournement.

12. Dispositif suivant l'une des revendications 8 à 11, caractérisé en ce que la lentille (54, 116) de Fresnel peut être pivotée entre une position recouvrant le plateau (38, 110) de mise à disposition ou le plateau (48) de retournement, et une position dégageant ce plateau.

13. Dispositif suivant l'une des revendications 1 à 7, caractérisé en ce qu'une source (114) lumineuse est disposée en dessous du plateau (38, 110) de mise à disposition ou aussi du plateau (48) de retournement pour éclairer le plateau, une lentille (54, 116) de Fresnel est disposée entre cette source lumineuse et le plateau (38, 110) de mise à disposition, un diffuseur translucide est disposé au-dessus, et un deuxième équipement (56, 118) de mesure électro-optique de la longueur et de la largeur de l'article (112) postal est disposé encore au-dessus.

14. Dispositif suivant la revendication 13, caractérisé en ce que le plateau (38, 110) de mise à disposition est formé par le côté de la lentille (54, 116) de Fresnel qui est tourné vers le deuxième équipement (56, 118) de mesure électro-optique.

15. Dispositif suivant la revendication 13, caractérisé en ce que le plateau (38, 110) de mise à disposition ou aussi le plateau (48) de retournement est formé par une plaque transparente disposée entre la lentille (54, 116) de Fresnel et le diffuseur.

16. Dispositif suivant l'une des revendications 8 à 15, caractérisé en ce que le deuxième équipement de mesure électro-optique est la caméra (58) électronique ou une deuxième caméra (56, 118) électronique.

17. Dispositif suivant l'une des revendications précédentes, caractérisé en ce qu'une taxe d'affranchissement est déterminée dans l'unité (66) de commande à partir des données de mesure, et elle est affichée sur l'organe d'affichage, et en ce qu'il est prévu un équipement (72) encaisseur qui, une fois la taxe encaissée, autorise par l'intermédiaire de l'unité (66) de commande l'équipement (60) applicateur à apposer une marque (61) d'affranchissement.

18. Dispositif suivant l'une des revendications précédentes, caractérisé en ce que la marque d'affranchissement est apposée sur une étiquette (61), et l'équipement (60) applicateur comprend une tête (64) qui est destinée à prendre en charge l'étiquette (61) et qui, en étant sélectivement rotative (C) autour d'un axe vertical et coulissante (B) verticalement, peut être positionnée tant au-dessus d'un distributeur (74) d'étiquettes qu'au-dessus du plateau (38, 110) de mise à disposition ou du plateau (48) de retournement.

19. Dispositif suivant la revendication 18, caractérisé en ce que la tête (64) est un coussin élastique pourvu d'un ou plusieurs canaux (65) pouvant recevoir une dépression d'air sous la commande de l'unité (66) de commande.

20. Dispositif suivant l'une des revendications 6 à 19, caractérisé en ce qu'au moins un récipient (76, 78) est disposé en dessous du parcours de déplacement du tiroir (36), et en ce que le plateau (38, 110) de mise à disposition ou aussi le plateau (48) de retournement peut être déplacé au-dessus du récipient (76, 78), et y être pivoté vers le bas.

21. Dispositif suivant l'une des revendications précédentes, caractérisé en ce qu'au moins une des caméras (56, 58, 118) électroniques est une caméra de balayage en lignes possédant un angle d'ouverture correspondant à la largeur du plateau (38, 110) de mise à disposition ou du plateau (48) de retournement, caméra en dessous de laquelle l'article (112) postal peut être déplacé.

22. Dispositif suivant l'une des revendications précédentes, caractérisé par une imprimante (80), qui est reliée à l'unité (66) de commande et délivre un justificatif de la taxe acquittée et/ou de l'exécution de l'expédition de l'article (112) postal, avec ou sans une image de la surface de cet article.

23. Procédé pour réceptionner et affranchir des articles (112) postaux de façon automatisée, comprenant les étapes suivantes :
- dépose par un client d'un article (112) postal sur un plateau (38, 110) horizontal de mise à disposition,
- détermination du poids et/ou des dimensions de l'article (112) postal par au moins un équipement (20, 22 ; 32', 32" ; 56 ; 58 ; 120, 122) de mesure,
- dans une unité (66) de commande, détermination d'une marque (61) d'affranchissement à apposer sur l'article (112) postal à partir des valeurs de mesure fournies par le ou les équipements (20, 22 ; 32', 32" ; 56 ; 58 ; 120, 122) de mesure,
caractérisé par les étapes suivantes :
- enregistrement, par une caméra (58) électronique, d'une image de la surface de l'article (112) postal placé sur le plateau (38, 110) de mise à disposition,
- représentation de cette image sur un écran (70), conjointement avec la marque (61) d'affranchissement à apposer ou des traits caractéristiques de cette marque,
- apposition de la marque (61) d'affranchissement sur l'article (112) postal, en un lieu d'apposition déterminé par le client par commande au clavier.

24. Procédé suivant la revendication 23, comportant les étapes supplémentaires suivantes :
- sur la représentation de l'image de la surface, indication du lieu prévu d'apposition de la marque (61) d'affranchissement sur l'article (112) postal,
- indication de l'accord du client concernant le lieu prévu d'apposition de la marque (61) d'affranchissement sur l'article (112) postal, par actionnement d'une première touche d'un équipement (68) d'entrée, ou actionnement d'au moins une deuxième touche pour sélectionner un autre lieu d'apposition.

25. Procédé suivant la revendication 23 ou 24, comportant les étapes supplémentaires suivantes :
- un moyen (18) de fermeture est ouvert avant de déposer l'article postal sur le plateau (38, 110) de mise à disposition se trouvant dans un casier (16) de réception, et fermé une fois la dépose effectuée, de sorte que l'article (112) postal est provisoirement placé hors d'accès du client,
- une fois la marque (61) d'affranchissement apposée, l'article (112) postal est évacué par le plateau (38, 110) de mise à disposition de telle sorte qu'il est définitivement placé hors d'accès du client,
- si aucune marque (61) d'affranchissement n'a été apposée, le plateau (38, 110) de mise à disposition est amené dans le casier (16) de réception et le moyen (18) de fermeture est ouvert à nouveau, de sorte que le client peut retirer l'article (112) postal non affranchi.

26. Procédé suivant la revendication 25, dans lequel le plateau (38, 110) de mise à disposition est, après la fermeture du moyen (18) de fermeture, déplacé à l'intérieur du carter (12) du dispositif (10) et, après accomplissement d'une distance donnée, un détecteur (34) détermine si l'article (112) postal a été déplacé conjointement avec le plateau (38, 110) de mise à disposition.

27. Procédé suivant la revendication 26, dans lequel, en cas de résultat négatif de la détermination effectuée par le détecteur (34), le plateau (38, 110) de mise à disposition est transporté dans sa position initiale, et le moyen (18) de fermeture est ouvert.

28. Procédé suivant l'une des revendications 23 à 27, une détermination du poids étant effectuée par le fait que le plateau (38, 110) de mise à disposition est provisoirement abaissé sur une balance (20, 22).

29. Procédé suivant la revendication 28, le plateau (38, 110) de mise à disposition étant, après une mesure du poids, déplacé en dessous de la caméra (58) électronique ou aussi d'une deuxième caméra (56, 118) électronique.

30. Procédé suivant l'une des revendications 23 à 29, la longueur et la largeur de l'article (112) postal étant déterminées au moyen de l'image de surface enregistrée par une caméra (56, 58, 118) électronique.

31. Procédé suivant la revendication 30, dans lequel un plateau (38, 110) de mise à disposition translucide est éclairé par une source (114) lumineuse disposée en dessous, une image en silhouette de l'article (112) postal étant utilisée, qui est enregistrée par la caméra (56, 58, 118) électronique disposée au-dessus de l'article (112) postal.

32. Procédé suivant l'une des revendications 23 à 31, la marque (61) d'affranchissement n'étant apposée qu'après règlement d'une taxe d'affranchissement à un équipement (72) prévu à cet effet.

33. Procédé suivant l'une des revendications 23 à 32, l'image de la surface étant reproduite sur l'écran (70) en étant orientée de telle sorte que, indépendamment de l'orientation de l'article (112) postal par rapport aux bords du plateau (38, 110) de mise à disposition, au moins un bord de l'article (112) postal est approximativement parallèle au bord de l'écran (70).

34. Procédé suivant l'une des revendications 23 à 33, la position prévue pour l'apposition de la marque (61) d'affranchissement étant affichée sur l'image de la surface de l'article (112) postal.

35. Procédé suivant la revendication 34, la position de l'image de la surface par rapport à la position de la marque (61) d'affranchissement pouvant être modifiée en actionnant une touche de l'équipement (68) d'entrée.

36. Procédé suivant l'une des revendications 23 à 35, un équipement (36, 46, 48) de retournement retournant l'article (112) postal de telle sorte qu'il repose sur sa face qui était auparavant tournée vers le haut.

37. Procédé suivant la revendication 36, l'équipement (36, 46, 48) de retournement retournant l'article (112) postal sur un plateau (48) de retournement, de sorte que le plateau (48) de retournement prend au moins provisoirement la place du plateau (38, 110) de mise à disposition et qu'on répète le processus d'enregistrement de la position, de la forme et des caractéristiques d'image de l'article postal.

38. Procédé suivant la revendication 37, l'article (112) postal étant retourné sur le plateau (48) de retournement par le fait que le plateau (48) de retournement est d'abord pivoté dans une position recouvrant le plateau (38, 110) de mise à disposition, puis est pivoté conjointement avec le plateau (38, 110) de mise à disposition d'environ 180° autour d'un axe (50) se trouvant à proximité d'un bord du plateau (38, 110) de mise à disposition, de sorte que le plateau (48) de retournement se trouve en dessous de l'article (112) postal, et enfin le plateau (38, 110) de mise à disposition est écarté par pivotement de sa position actuelle, où il recouvrait le plateau (48) de retournement.

39. Procédé suivant la revendication 38, le plateau (38, 110) de mise à disposition étant ensuite amené dans une position horizontale, puis le plateau (48) de retournement étant pivoté autour de l'axe (50), de sorte que l'article (112) postal peut glisser sur le plateau (38, 110) de mise à disposition.

40. Procédé suivant l'une des revendications 23 à 39, dans lequel, à la suite de l'accord donné par le client pour une position, représentée sur l'écran (70), de la marque (61) d'affranchissement sur l'article (112) postal,
- la marque (61) d'affranchissement est apposée sur l'article (112) postal par un équipement (60) applicateur qui se trouve au-dessus de l'article (112) postal et possède une partie (64) de tête transférant la marque (61) d'affranchissement,
- la partie (64) de tête étant à cet effet tournée (C) autour d'un axe vertical de telle sorte qu'un bord de la marque (61) d'affranchissement est environ parallèle à un bord de l'article (112) postal, et, indépendamment de cela,
- l'équipement (60) applicateur étant déplacé, le long d'un premier axe (A) horizontal, dans une première position calculée, et, ensuite, auparavant ou simultanément,
- le plateau (38, 110) de mise à disposition est déplacé, le long d'un deuxième axe horizontal orthogonal au premier axe (A), et
- l'équipement (60) applicateur abaissant ensuite la partie (64) de tête en direction (B) de l'article (112) postal, et apposant la marque (61) d'affranchissement sur cet article.

41. Procédé suivant la revendication 40, la marque d'affranchissement étant une étiquette (61) autocollante, et la partie (64) de tête prenant en charge et transportant l'étiquette au moyen d'un coussin élastique pourvu d'un ou plusieurs canaux (65) pouvant recevoir une dépression d'air.

42. Procédé suivant la revendication 41, l'étiquette (61) autocollante étant fournie par une imprimante (74) d'étiquettes.

43. Procédé suivant l'une des revendications 40 à 42, l'image de la surface de l'article (112) postal étant mémorisée de façon permanente une fois la marque (61) d'affranchissement apposée.

44. Procédé suivant l'une des revendications 23 à 43, une copie de l'image de la surface étant imprimée sur un justificatif et mise à la disposition du client.

45. Procédé suivant l'une des revendications 23 à 44, une deuxième image de la surface, à plus grande résolution que la première, étant réalisée et mémorisée.

46. Procédé suivant la revendication 45, dans lequel on utilise une deuxième caméra (58) de balayage en lignes, à haute résolution, l'image étant réalisée en déplaçant le plateau (38, 110) de mise à disposition par rapport à la caméra (58) de balayage en lignes.

47. Procédé suivant l'une des revendications 23 à 46, le plateau (38, 110) de mise à disposition ou le plateau (48) de retournement étant basculé une fois la marque (61) d'affranchissement apposée, de sorte que l'article (112) postal glisse dans un récipient (76, 78).

48. Procédé suivant l'une des revendications 23 à 47, l'image de la surface de l'article (112) postal étant soumise à un procédé de reconnaissance d'écriture, dont le résultat est indiqué au client et éventuellement corrigé par le client.

49. Procédé suivant la revendication 48, un code postal étant obtenu à partir de l'écriture reconnue, qui est imprimé en plus sur l'article (112) postal, et/ou inclus dans la marque (61) d'affranchissement, et/ou utilisé pour la commande d'aiguillages pour l'acheminement ultérieur de l'article (112) postal.
